# EUROPEAN PATENT APPLICATION

(11) **EP 3 046 020 A1**
(43) Date of publication of application: **20.07.2016**
(21) Application number: 13893662.0
(22) Date of filing: 11.09.2013
(51) Int. Cl.: G06F 3/0489

(54) **DISPLAY METHOD FOR TOUCHSCREEN AND TERMINAL**

(71) Applicant: Yulong Computer Telecommunication Scientific (Shenzhen) Co. Ltd., Shenzhen, Guangdong 518057 (CN); Dongguan Yulong Telecommunication Tech Co. Ltd., Guangdong 523808 (CN)
(72) Inventor: SHENG, Jingen, Shenzhen Guangdong 518057 (CN)
(74) Representative: Johnson, Richard Alan
(86) International application number: PCT/CN2013/083344
(87) International publication number: WO 2015/035580

(57) **Abstract**

The present invention provides a display method for a touchscreen and a terminal. The display method for the touchscreen includes acquiring the position of a touch point on the touchscreen when an incoming call interface is displayed, and displaying a number of touch buttons around the touch point. By means of the technical solution of the present invention, the position of the touch buttons can be flexibly adjusted according to the position of the touch point, so as to facilitate user operations.

## Description

### FIELD OF THE TECHNICAL

The present invention relates to communication technology field, and particularly to a display method for a touchscreen and a terminal.

### BACKGROUND

At present, on an incoming interface of a terminal, when a user wants to answer or reject a call, the user needs to click the answer or reject button, or answers or rejects the call via sliding. Some optimized answering methods need a user to click a clickable region set by the interface and slide up or down to answer/reject a call.

The shortcoming of such operation methods is that when a user wants to answer or reject a call, the user needs to click a corresponding region of the interface. When the screen is great, it is difficult for the user to touch the clickable region and slide, so it is not convenient for the user to perform operations by one hand. Currently, there is no related art to solve the problem.

### SUMMARY

The present invention aims to solve one of technical problems in prior art.

Therefore, a purpose of the present invention is to provide a display method for a touchscreen, so as to facilitate a user to perform operations by one hand.

Another purpose of the present invention is to provide a terminal.

To realize the above purposes, embodiments in accordance with a first aspect of the present invention provide a display method for a touchscreen which includes acquiring the position of a touch point on the touchscreen when an incoming call interface is displayed, and displaying a plurality of touch buttons around the touch point.

According to the display method for the touchscreen in the embodiments of the present invention, display modes of the touch buttons can be correspondingly changed along with the change of the position of the touch point. The touch point is the position of the touchscreen touched by an input object, such as a user's finger. By doing so, the display positions of the touch buttons can be changed dynamically, so as to facilitate a user to perform operations by one hand.

Furthermore, the display method for the touchscreen in the above embodiments of the present invention can further include the following additional technical features.

According to an embodiment of the present invention, the step of displaying the touch buttons around the touch point specifically includes displaying the touch buttons at any positions of an overlapping region between a circle region the center of which is the touch point and the touch screen. The touch buttons can be displayed in adaptive mode along with the change of the touch point.

According to an embodiment of the present invention, the touch buttons are displayed above and below the touch point symmetrically or displayed on the left and right of the touch point symmetrically.

According to an embodiment of the present invention, when the position of the touch point falls within an edge region of the touchscreen, the touch buttons are displayed on an arc the center of which is the touch point and are all further displayed on one side of the touch point. When the position of the touch point falls within the edge region of the touchscreen, the touch buttons should be displayed on one side of the touch point, and cannot be displayed around the touch point randomly. By doing so, it facilitates a user to use his/her finger to touch the touch buttons in a great space, thereby reducing error triggering.

According to an embodiment of the present invention, the display method for the touchscreen can further include displaying the dragging button on the touch point, and displaying the touch buttons around the dragging button at intervals; executing a function corresponding to any of the touch buttons when the dragging button is dragged to the position of any of the touch buttons.

To facilitate the user to sense the touch point, the dragging button is displayed above the touch point. The dragging button can be dragged by the user. The touch buttons displayed on the current interface are displayed around the dragging button at intervals, so as to facilitate the user to drag the dragging button to any touch button without triggering other touch buttons incorrectly.

According to an embodiment of the present invention, a line connecting the display positions of the touch buttons together is arc-shaped. When the user performs operations by one hand, the thumb is typically used to perform touch operations. As when the thumb slides up and down, the sliding track is typically arc-shaped, thus to facilitate the user to use the thumb to perform touch operations, the touch buttons are arranged in arc, which can cause the positions of the touch buttons to be on the possible sliding track of the thumb, thereby facilitating the thumb to touch the corresponding touch button conveniently as far as possible.

According to an embodiment of the present invention, the dragging button is arranged on an arc-shaped connection line. When the touch buttons are arranged in arc, the dragging button is arranged to be adjacent to the touch buttons as far as possible, which facilitates the user to drag the dragging button to a specified touch button when the user performs operations by one hand.

According to an embodiment of the present invention, the dragging button is arranged between any two of the touch buttons. When the touch buttons are arranged on the sliding track of the thumb, to reduce error triggering, the touch buttons are arranged on two sides of the dragging button.

According to an embodiment of the present invention, when the position of the dragging button is at the edge of the touchscreen, the touch buttons are displayed on an arc the center of which is the dragging button.

When the position of the dragging button is not at the edge of the touchscreen, the dragging button and the touch buttons can be arranged in arc. However, when the position of the dragging button is at the edge of the touchscreen, as the display region on one side of the dragging button is limited, the touch buttons cannot be displayed in the display region. Therefore, under this condition, the dragging button and the touch buttons cannot be arranged in arc, and the display positions of the touch buttons can be dynamically changed according to the specific position of the dragging button.

According to an embodiment of the present invention, the display method for the touchscreen can further include detecting the size of the area of the touchscreen taken up by the touch point; adjusting the display size of each touch button in adaptive mode according to the size of the detected touch point.

Fingers of different users may have different sizes and shapes. Therefore, to facilitate a user to better touch the touch buttons, the sizes of the touch buttons can be adjusted according to the size of the area of the touchscreen taken up by the user's finger, thereby further enhancing the flexibility of the display of the touch buttons.

According to an embodiment of the present invention, the touch buttons include at least one of or a combination of the following: an answer button, a reject button, and a notification prompt button.

To realize the above purposes, embodiments in accordance with a second aspect of the present invention provides a terminal which includes an acquisition unit configured to acquire the position of a touch point on the touchscreen when the incoming call interface is displayed, and a displaying unit connected to the acquisition unit and configured to display a number of touch buttons around the touch point.

The terminal in the embodiment of the present invention can correspondingly change display modes of the touch buttons along with the change of the position of the touch point. The touch point is the position of the touchscreen touched by an input object, such as a user's finger. By doing so, the display position of the touch buttons can be changed dynamically, so as to facilitate a user to perform operations by one hand.

Furthermore, the terminal in accordance with the above embodiments can further include the following additional features.

According to an embodiment of the present invention, the displaying unit is further configured to display the touch buttons at any positions of an overlapping region between a circle region the center of which is the touch point and the touchscreen. The touch buttons can be displayed in adaptive mode along with the change of the touch point.

According to an embodiment of the present invention, the touch buttons are displayed above and below the touch point symmetrically or displayed on the left and right of the touch point symmetrically.

According to an embodiment of the present invention, when the position of the touch point falls within an edge region of the touchscreen, the displaying unit is further configured to display the touch buttons on an arc the center of which is the touch point and further display all the touch buttons on one side of the touch point. When the position of the touch point falls within the edge region of the touchscreen, the touch buttons should be displayed on one side of the touch point, and cannot be displayed around the touch point randomly. By doing so, it facilitates the user to use his/her finger to touch the touch buttons in a great space, thereby reducing error triggering. According to an embodiment of the present invention, the displaying unit is further configured to display the dragging button on the touch point, and display the touch buttons around the dragging button at intervals. The terminal can further include a control unit connected to the displaying unit, and when the dragging button is dragged to the position of any of the touch buttons, the control unit executes a function corresponding to the any of the touch buttons. To facilitate the user to sense the touch point, the dragging button is displayed above the touch point. The dragging button can be dragged by the user. The touch buttons displayed on the current interface are displayed around the dragging button at intervals, so as to facilitate the user to drag the dragging button to any touch button without triggering other touch buttons incorrectly.

According to an embodiment of the present invention, a line connecting the display positions of the touch buttons together is arc-shaped. When the user performs operations by one hand, the thumb is typically used to perform touch operations. As when the thumb slides up and down, the sliding track is typically arc-shaped, thus to facilitate the user to use the thumb to perform touch operations, the touch buttons are arranged in arc, which can cause the positions of the touch buttons to be on the possible sliding track of the thumb, thereby facilitating the thumb to touch the corresponding touch button conveniently as far as possible.

According to an embodiment of the present invention, the dragging button is arranged on an arc-shaped connection line. When the touch buttons are arranged in arc, the dragging button is arranged to be adjacent to the touch buttons as far as possible, which facilitates the user to drag the dragging button to a specified touch button when the user performs operations by one hand.

According to an embodiment of the present invention, the dragging button is arranged between any two of the touch buttons. When the touch buttons are arranged on the sliding track of the thumb, to reduce error triggering, the touch buttons are arranged on two sides of the dragging button.

According to an embodiment of the present invention, the displaying unit is further configured to display the touch buttons on an arc the center of which is the dragging button when the position of the dragging button is at the edge of the touchscreen.

According to an embodiment of the present invention, the terminal further includes a detecting unit configured to detect the size of the area of the touchscreen taken up by the touch point. The displaying unit is further configured to adjust the display size of each touch button according to the size of the touch point. Fingers of different users may have different sizes and shapes. Therefore, to facilitate a user to better touch the touch buttons, the size of the touch buttons can be adjusted according to the size of the area of the touchscreen taken up by the user's finger, thereby further enhancing the flexibility of the display of the touch buttons.

According to an embodiment of the present invention, the touch buttons include at least one of or a combination of the following: an answer button, a reject button, and a notification prompt button.

To realize the above purposes, embodiments in accordance with a third aspect of the present invention provide a program product stored in a non-volatile machine readable medium The program product includes machine executable instructions executed by the computer system to execute the following steps: acquiring the position of a touch point on the touchscreen, and displaying a number of touch buttons in adaptive mode according to the position of the touch point.

Embodiments in accordance with a fourth aspect of the present invention provides a non-volatile machine readable medium storing a program product for controlling display of the touchscreen. The program product includes machine executable instructions executed by the computer system to execute the following steps: acquiring the position of a touch point on the touchscreen, and displaying a number of touch buttons in adaptive mode according to the position of the touch point.

Embodiments in accordance with a fifth aspect of the present invention provides a machine-readable program configured to enable the machine to execute any of the display method for the touchscreen.

Embodiments in accordance with a third aspect of the present invention provides a storage medium storing a machine readable program. Wherein, the machine-readable program is configured to enable the machine to execute any of the display method for the touchscreen.

### BRIEF DESCRIPTION OF THE DRAWINGS

FIG. 1A is a schematic block diagram of a terminal in accordance with an exemplary embodiment of the present invention.
FIG. 1B is a display schematic diagram of touch buttons in accordance with an exemplary embodiment of the present invention.
FIG. 1C is a display schematic diagram of touch buttons in accordance with an exemplary embodiment of the present invention.
FIGs. 2 -8 are display schematic diagrams of touch buttons and a dragging button in accordance with an exemplary embodiment of the present invention.
FIG. 9 shows a schematic flow chart of a display method for a touchscreen in accordance with an exemplary embodiment of the present invention.

### DETAILED DESCRIPTION OF ILLUSTRATED EMBODIMENTS

To understand the above-mentioned purposes, features and advantages of the present disclosure more clearly, the present disclosure will be further described in detail below in combination with the accompanying drawings and the specific implementations. It should be noted that, the embodiments of the present application and the features in the embodiments may be combined with one another without conflicts.

Many specific details will be described below for sufficiently understanding the present disclosure. However, the present disclosure may also be implemented by adopting other manners different from those described herein. Accordingly, the protection scope of the present invention is not limited by the specific embodiments disclosed below.

The term "terminal" used in the specification can refer to a mobile phone, a laptop computer, a desk computer, a digital broadcast receiver, a personal digital assistant (PDA), a portable multimedia player, a camera, a navigation device, a tablet computer, and/or an electronic reader.

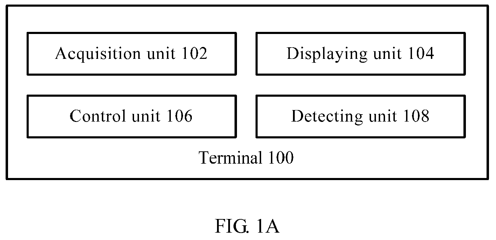

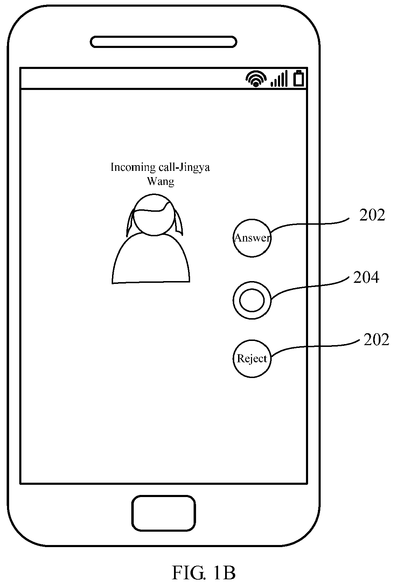

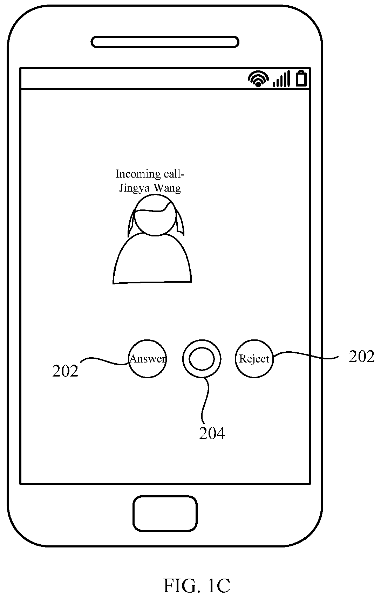

FIG. 1 shows a block diagram of a terminal in accordance with an exemplary embodiment of the present invention.

As shown in FIG. 1A, an exemplary embodiment of the present invention provides a terminal 100 which includes an acquisition unit 102 configured to acquire the position of a touch point on the touchscreen, and a displaying unit 104 connected to the acquisition unit 102 and configured to display a number of touch buttons in adaptive mode according to the position of the touch point.

The terminal in the embodiment of the present invention can correspondingly change display modes of the touch buttons along with the change of the position of the touch point. The touch point is the position of the touchscreen touched by an input object, such as a user's finger. By doing so, the display positions of the touch buttons can be changed dynamically, so as to facilitate a user to perform operations by one hand.

According to an embodiment of the present invention, the displaying unit 104 is further configured to display the touch buttons at any positions of an overlapping region between a circle region the center of which is the touch point and the touchscreen. The touch buttons can be displayed in adaptive mode along with the change of the touch point.

According to an embodiment of the present invention, the touch buttons are displayed above and below the touch point symmetrically or displayed on the left and right of the touch point symmetrically. As shown in FIG. 1B, touch buttons 200 (an answer touch button and a reject touch button) are displayed on an incoming call interface, and a dragging button is displayed on the touch point 204. To facilitate the user to answer a call by one hand, the answer touch button and the reject touch button can be displayed above and below the dragging button symmetrically. Beside this, as shown in FIG. 1C, the answer touch button and the reject touch button are displayed on the left and right of the dragging button symmetrically.

According to an embodiment of the present invention, when the position of the touch point falls within an edge region of the touchscreen, the displaying unit 104 is further configured to display the touch buttons on an arc the center of which is the touch point and further display all the touch buttons on one side of the touch point. When the position of the touch point falls within the edge region of the touchscreen, the touch buttons should be displayed on one side of the touch point, and cannot be displayed around the touch point randomly. By doing so, it facilitates the user to use his/her finger to touch the touch buttons in a great space, thereby reducing error triggering.

According to an embodiment of the present invention, the displaying unit 104 is further configured to display the dragging button on the touch point, and display the touch buttons around the dragging button at intervals. The terminal can further include a control unit 106 connected to the displaying unit 104, and when the dragging button is dragged to the position of any of the touch buttons, the control unit 106 executes a function corresponding to the any of the touch buttons. To facilitate the user to sense the touch point, the dragging button is displayed above the touch point. The dragging button can be dragged by the user. The touch buttons displayed on the current interface are displayed around the dragging button at intervals, so as to facilitate the user to drag the dragging button to any touch button without triggering other touch buttons incorrectly.

According to an embodiment of the present invention, a line connecting the display positions of the touch buttons together is arc-shaped. When the user performs operations by one hand, the thumb is typically used to perform touch operations. As when the thumb slides up and down, the sliding track is typically arc-shaped, thus to facilitate the user to use the thumb to perform touch operations, the touch buttons are arranged in arc, which can cause the positions of the touch buttons to be on the possible sliding track of the thumb, thereby facilitating the thumb to touch the corresponding touch button conveniently as far as possible.

According to an embodiment of the present invention, the dragging button is arranged on an arc-shaped connection line. When the touch buttons are arranged in arc, the dragging button is arranged to be adjacent to the touch buttons as far as possible, which facilitates the user to drag the dragging button to a specified touch button when the user performs operations by one hand.

According to an embodiment of the present invention, the dragging button is arranged between any two of the touch buttons. When the touch buttons are arranged on the sliding track of the thumb, to reduce error triggering, the touch buttons are arranged on two sides of the dragging button.

According to an embodiment of the present invention, the displaying unit 104 is further configured to display the touch buttons on an arc the center of which is the dragging button when the position of the dragging button is at the edge of the touchscreen.

According to an embodiment of the present invention, the terminal further includes a detecting unit 108 configured to detect the size of the area of the touchscreen taken up by the touch point. The displaying unit 104 is further configured to adjust the display size of each touch button according to the size of the touch point. Fingers of different users may have different sizes and shapes. Therefore, to facilitate a user to better touch the touch buttons, the size of the touch buttons can be adjusted according to the size of the area of the touchscreen taken up by the user's finger, thereby further enhancing the flexibility of the display of the touch buttons.

According to an embodiment of the present invention, the touch buttons include at least one of or a combination of the following: an answer button, a reject button, and a notification prompt button.

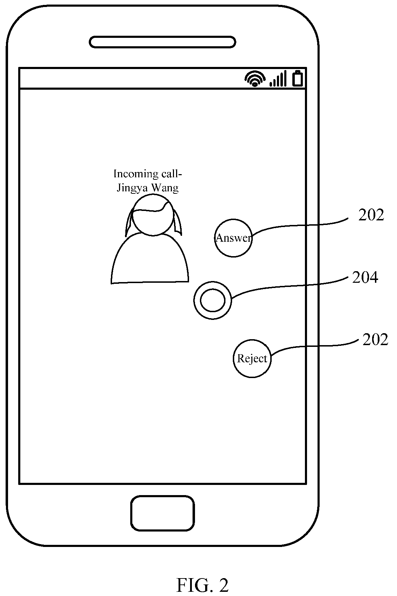

The following will specifically illustrate the display principle of the touch buttons of the embodiments of the present invention in conjunction with FIGs. 2 -4, taking an incoming call scenario for an example.

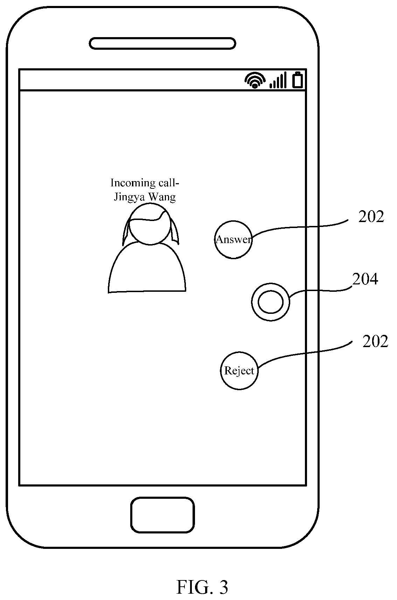

As shown in FIG. 2, the incoming call interface mainly includes three touch buttons: touch buttons 202 and a dragging button 204. In this embodiment, the touch buttons 202 include an answer button and a reject button. When there is a new incoming call and the user uses a finger to touch the incoming call interface, the dragging button 204 is displayed on the touch point, and the display of the dragging button 204 changes along with the change of the position of the touch point. That is, the position of the touch point is the position of the dragging button. The arrangement of the answer button and the reject button also changes along with the change of the position of the dragging button 204, and FIGs. 3 -4 illustrate the detailed change mode.

It should be noted that in FIG. 2, if the position of the touchscreen touched by the finger is not within the edge region of the touchscreen, the position of the dragging button 204 is the position of the touchscreen touched by the finger. When the touchscreen is great, if the user performs operations by one hand, the user usually uses his/her thumb to perform operations. When the user users the thumb to perform operations, the sliding track of the thumb on the touchscreen is generally arc-shaped. Therefore, to facilitate the thumb to touch the corresponding touch button conveniently, the touch buttons and the dragging button are arranged in arc. By doing so, the dragging button 204 can be smoothly dragged to the corresponding touch button no matter whether the dragging button 204 is dragged up or down by the thumb.

As shown in FIG. 3, if the position touched by the user's finger is within the edge region of the touchscreen (four side edges of the touchscreen), the touch buttons 202 and the dragging button 204 cannot be arranged in arc. At this point, the touch buttons 202 are displayed adjacent to another side of the dragging button 204, which can also facilitate control of the touch buttons 202 during one hand operation.

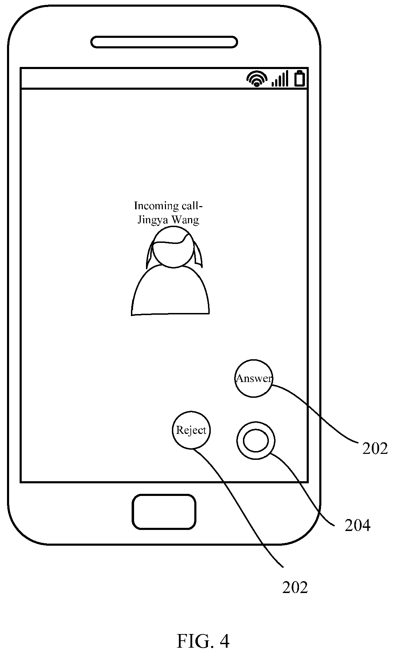

As shown in FIG. 4, if the position touched by the user's finger is within any of four comers of the touchscreen, the touch buttons 202 and the dragging button 204 cannot be arranged in arc. At this point, the touch buttons 202 are displayed adjacent to another side of the dragging button 204, which can also facilitate control of the touch buttons 202 during one hand operation.

Therefore, the touch buttons of the present invention can be displayed in adaptive mode according to the position of the touch point. When the left hand is used to perform operations, if the position of the touch point is at bottom left (edge region), the touch buttons can be mainly displayed on the right side of the touch point (upper right or bottom right). When the right hand is used to perform operations, if the position of the touch point is at bottom right (edge region), the touch buttons can be mainly displayed on the left side of the touch point (upper left or bottom left). Furthermore, the touch buttons are arranged on an arc the center of which is the touch point, which enables the user to operate the touch buttons whenever and whereever when the user performs operations by one hand, thereby user's operation is not limited by the positions of the touch buttons.

FIGs. 2 -4 just show display modes of the touch buttons when several representative positions of the touchscreen are touched by a finger. Beside these, those skilled in the art should understand that when a finger touches any other position of the touchscreen, the touch buttons can be displayed in adaptive mode according to the position of the dragging button, which will not be repeated herein.

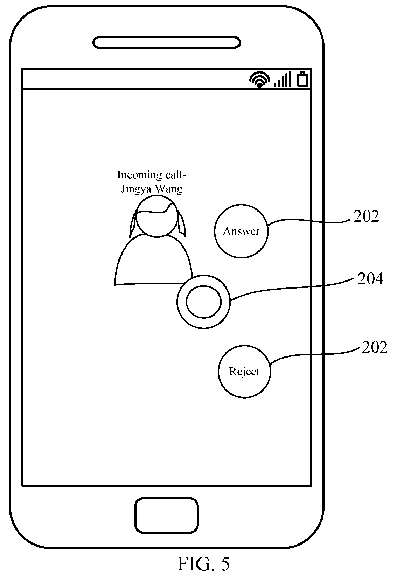

As fingers of different persons may have different sizes and shapes, the sizes of the positions of the touchscreen touched by different fingers may be different. For example, as the fingers of children are small, the size of the touch point is relative small, while the fingers of adult are great, the size of the touch point is relative great. To adapt to this change, the terminal can detect the touch size, and adjust the display sizes of the touch buttons 202 according to the touch size. As shown in FIG. 5, comparing to the touch buttons 202 shown in FIG. 2, the display sizes of the touch buttons 202 become greater. Similarly, if the size of the touch point is small, the display sizes of the touch buttons 202 will become small.

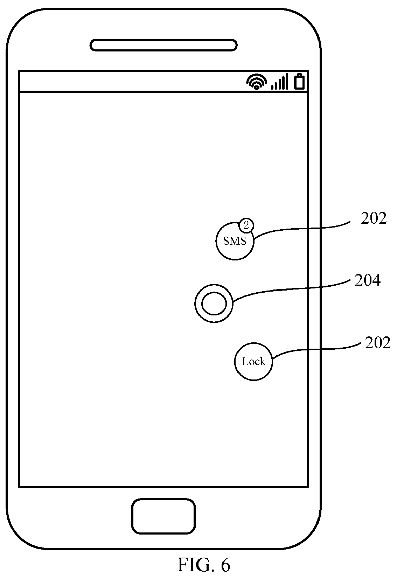

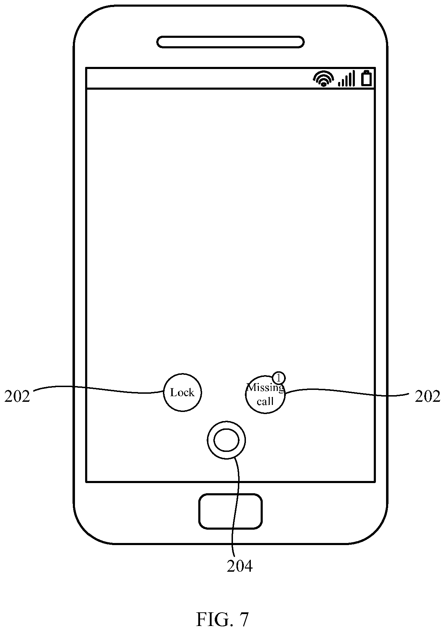

The following will specifically illustrate the embodiments of the present invention in conjunction with FIG. 6 and FIG. 7, taking a lock interface for an example.

As shown in FIG. 6, the lock interface includes the touch buttons 202. In this embodiment, the touch buttons includes an unlock button and a short message notification button. On the lock interface, if the user uses his/her finger to touch the touchscreen, the dragging button 204 is displayed on the touch point touched by the finger. The display of the dragging button 204 can change along with the change of the touch point. If a new short message is received when the terminal is in the lock state, the short message notification button will be displayed on the lock interface, and the number of new short messages is also displayed. When the user uses his/her finger to touch the touchscreen, the touch buttons 202 are arranged in adaptive mode according to the position of the dragging button 204. In FIG. 6, the position of the dragging button 204 is not within the edge region of the touchscreen, thus there is enough space for display of the touch buttons 202. Similarly, to facilitate the user to perform operations by one hand and to conform to the sliding track of the thumb, after the touch buttons 202 are adjusted in adaptive mode, the touch buttons 202 and the dragging button 204 cooperatively form an arc.

As shown in FIG. 7, on the lock interface, in this embodiment, the touch buttons 202 include an unlock button and a missing call notification button. In other words, besides the short message notification button, there are touch buttons such as the missing call notification button. Similarly, the touch buttons are adjusted in adaptive mode according to the position of the dragging button. In FIG. 7, as the position of the dragging button is within the below edge region of the touchscreen, the touch buttons 202 can only be displayed above the dragging button 204.

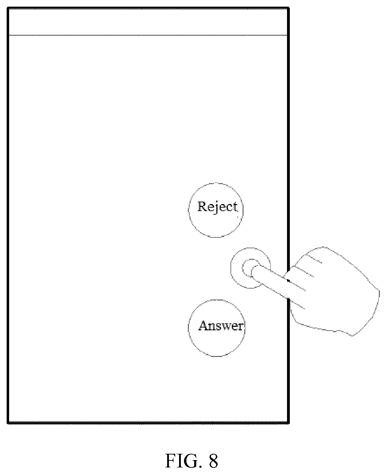

As shown in FIG. 8, when the user uses his/her finger to touch the touchscreen, the dragging button is moved from the other position to the position of the touch point, and the display of the touch buttons dynamically changes along with the change of the position of the touch point.

Therefore, under the condition of that there is a new incoming call, when an input object such as a finger touches any position of the touchscreen, the user can answer or reject the call by performing operations on the any position, so as to facilitate user's operations. Especially when the touchscreen is a great screen, it is facilitate the user to perform operations by one hand. Under other scenario, for example, for the lock interface and any application interface, such display scheme can be employed.

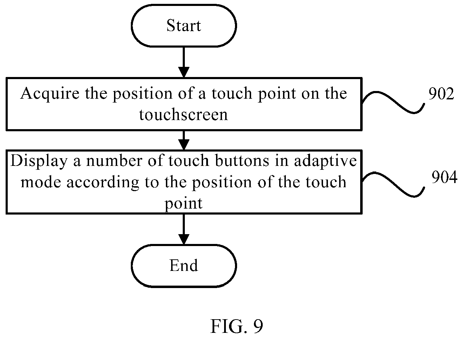

FIG. 9 is a schematic flow chart of a display method for a touchscreen in accordance with an exemplary embodiment of the present invention.

As shown in FIG. 9, to realize the above purposes, an embodiment in accordance with a second aspect of the present invention provides a display method for a touchscreen which can include step 902, acquiring the position of a touch point on the touchscreen, and step 904, displaying a number of touch buttons in adaptive mode according to the position of the touch point.

According to an embodiment of the present invention, the step of displaying the touch buttons around the touch point specifically includes displaying the touch buttons at any positions of an overlapping region between a circle region the center of which is the touch point and the touch screen. The touch buttons can be displayed in adaptive mode along with the change of the touch point.

According to an embodiment of the present invention, the touch buttons are displayed above and below the touch point symmetrically or displayed on the left and right of the touch point symmetrically.

According to an embodiment of the present invention, when the position of the touch point falls within an edge region of the touchscreen, the touch buttons are displayed on an arc the center of which is the touch point and are all further displayed on one side of the touch point. When the position of the touch point falls within the edge region of the touchscreen, the touch buttons should be displayed on one side of the touch point, and cannot be displayed around the touch point randomly. By doing so, it facilitates a user to use his/her finger to touch the touch buttons in a great space, thereby reducing error triggering.

The display method for a touchscreen in accordance with the embodiments of the present invention can correspondingly change display modes of the touch buttons along with the change of the position of the touch point. The touch point is the position of the touchscreen touched by an input object such as a user's finger. By doing so, the display positions of the touch buttons can be changed dynamically, so as to facilitate the user to perform operations by one hand.

According to an embodiment of the present invention, the display method for the touchscreen further includes displaying the dragging button on the touch point, and displaying the touch buttons around the dragging button at intervals; executing a function corresponding to any of the touch buttons when the dragging button is dragged to the position of any of the touch buttons.

To facilitate the user to sense the touch point, the dragging button is displayed above the touch point. The dragging button can be dragged by the user. The touch buttons displayed on the current interface are displayed around the dragging button at intervals, so as to facilitate the user to drag the dragging button to any touch button without triggering other touch buttons incorrectly.

According to an embodiment of the present invention, a line connecting the display positions of the touch buttons together is arc-shaped. When the user performs operations by one hand, the thumb is typically used to perform touch operations. As when the thumb slides up and down, the sliding track is typically arc-shaped, thus to facilitate the user to use the thumb to perform touch operations, the touch buttons are arranged in arc, which can cause the positions of the touch buttons to be on the possible sliding track of the thumb, thereby facilitating the thumb to touch the corresponding touch button conveniently as far as possible.

According to an embodiment of the present invention, the dragging button is arranged on an arc-shaped connection line. When the touch buttons are arranged in arc, the dragging button is arranged to be adjacent to the touch buttons as far as possible, which facilitates the user to drag the dragging button to a specified touch button when the user performs operations by one hand.

According to an embodiment of the present invention, the dragging button is arranged between any two of the touch buttons. When the touch buttons are arranged on the sliding track of the thumb, to reduce error triggering, the touch buttons are arranged on two sides of the dragging button.

According to an embodiment of the present invention, when the position of the dragging button is at the edge of the touchscreen, the touch buttons are displayed on an arc the center of which is the dragging button.

When the position of the dragging button is not at the edge of the touchscreen, the dragging button and the touch buttons can be arranged in arc. However, when the position of the dragging button is at the edge of the touchscreen, as the display region on one side of the dragging button is limited, the touch buttons cannot be displayed in the display region. Therefore, under this condition, the dragging button and the touch buttons cannot be arranged in arc, and the display positions of the touch buttons can be dynamically changed according to the specific position of the dragging button.

According to an embodiment of the present invention, the display method for the touchscreen can further include detecting the size of the area of the touchscreen taken up by the touch point; adjusting the display size of each touch button in adaptive mode according to the size of the detected touch point.

Fingers of different users may have different sizes and shapes. Therefore, to facilitate a user to better touch the touch buttons, the sizes of the touch buttons can be adjusted according to the size of the area of the touchscreen taken up by the user's finger, thereby further enhancing the flexibility of the display of the touch buttons.

According to an embodiment of the present invention, the touch buttons include at least one of or a combination of the following: an answer button, a reject button, and a notification prompt button.

Embodiments in accordance with a third aspect of the present invention provide a program product (not shown) stored in a non-volatile machine readable medium The program product includes machine executable instructions executed by the computer system to execute the following steps: acquiring the position of a touch point on the touchscreen, and displaying a number of touch buttons in adaptive mode according to the position of the touch point.

According to embodiments of the present invention, the present invention further provides a non-volatile machine readable medium storing a program product (not shown) for controlling display of the touchscreen. The program product includes machine executable instructions executed by the computer system to execute the following steps: acquiring the position of a touch point on the touchscreen, and displaying a number of touch buttons in adaptive mode according to the position of the touch point.

According to embodiments of the present invention, the present invention further provides a machine-readable program (not shown) configured to enable the machine to execute any of the display method for the touchscreen.

According to embodiments of the present invention, the present invention further provides a storage medium (not shown) storing a machine readable program. Wherein, the machine-readable program is configured to enable the machine to execute any of the display method for the touchscreen.

By means of the technical solution of the present invention, when the user uses a finger to touch any position of the touchscreen, the dragging button is displayed on the touch point. The touch buttons displayed on the current interface can be displayed in adaptive mode according to the position of the touch point, so as to facilitate the user to use a finger to touch the corresponding touch button. For a large screen, it facilitates the user to perform operations by one hand, so as to realize convenient purposes.

The foregoing descriptions are merely preferred embodiments of the present disclosure, rather than limiting the present disclosure. Various modifications and alterations may be made to the present disclosure for those skilled in the art. Any modification, equivalent substitution, improvement or the like made within the spirit and principle of the present disclosure shall fall into the protection scope of the present disclosure.

## Claims

1. A display method for a touchscreen, comprising:
acquiring the position of a touch point on the touchscreen when an incoming call interface is displayed;
displaying a plurality of touch buttons around the touch point.

2. The display method of claim 1, wherein the step of displaying a plurality of touch buttons around the touch point specifically comprises:
displaying the plurality of touch buttons at any positions of an overlapping region between a circle region the center of which is the touch point and the touchscreen.

3. The display method of claim 2, wherein the plurality of touch buttons are displayed above and below the touch point symmetrically or displayed on the left and right of the touch point symmetrically.

4. The display method of claim 2, wherein when the position of the touch point falls within an edge region of the touchscreen, the plurality of touch buttons are displayed on an arc the center of which is the touch point and are all further displayed on one side of the touch point.

5. The display method of claim 1, wherein a dragging button is displayed on the touch point, and the plurality of touch buttons are displayed around the dragging button at intervals;
the dragging button is able to be dragged to the position of any of the plurality of touch buttons, so as to execute a function corresponding to the any of the plurality of touch buttons;
a line connecting the display positions of the plurality of touch buttons together is arc-shaped.

6. The display method of claim 1, wherein the display method further comprising:
detecting the size of the area of the touchscreen taken up by the touch point;
adjusting the display size of each of the plurality of touch buttons in adaptive mode according to the size of the detected touch point.

7. The display method of any of claims 1 -6, wherein the plurality of touch buttons comprise at least one of or a combination of the following: an answer button and a reject button.

8. A terminal comprising:
an acquisition unit configured to acquire the position of a touch point on the touchscreen when an incoming call interface is displayed;
a displaying unit connected to the acquisition unit and configured to display a plurality of touch buttons around the touch point.

9. The terminal of claim 8, wherein the displaying unit is further configured to display the plurality of touch buttons at any positions of an overlapping region between a circle region the center of which is the touch point and the touchscreen.

10. The terminal of claim 9, wherein the plurality of touch buttons are displayed above and below the touch point symmetrically or displayed on the left and right of the touch point symmetrically.

11. The terminal of claim 9, wherein the displaying unit is further configured to display the plurality of touch buttons on an arc the center of which is the touch point and further display the plurality of touch buttons on one side of the touch point when the position of the touch point falls within an edge region of the touchscreen.

12. The terminal of claim 8, wherein the displaying unit is further configured to display a dragging button on the touch point, and display the plurality of touch buttons around the dragging button at intervals;
the terminal further comprises a control unit connected to the displaying unit and configured to execute a function corresponding to any of the plurality of touch buttons when the dragging button is dragged to the position of the any of the plurality of touch buttons;
a line connecting the display positions of the plurality of touch buttons together is arc-shaped, the dragging button is displayed on the arc-shaped connection line, and the dragging button is arranged between any two of the plurality of touch buttons.

13. The terminal of claim 8, wherein the terminal further comprises:
a detecting unit configured to detect the size of the area of the touchscreen taken up by the touch point;
the displaying unit is further configured to adjust the display size of each of the plurality of touch buttons according to the size of the detected touch point.

14. The terminal of any of claims 8-13, wherein the plurality of touch buttons comprises at lest one of or a combination of the following: an answer button and a reject button.
